# DEMANDE DE BREVET EUROPEEN

(11) **EP 1 072 619 A1**
(43) Date de publication de la demande: **31.01.2001**
(21) Numéro de dépôt: 00402101.0
(22) Date de dépôt: 21.07.2000
(51) Int. Cl.: C08F 110/06, C08F 4/02, C08F 4/64

(54) **Procédé de préparation de support de catalyseur pour la polymérisation des alpha-olefines, et support ainsi obtenu**

(30) Priorité: 28.07.1999 FR 9909796; 04.08.1999 FR 9910129
(71) Demandeur: Atofina, 92800 Puteaux (FR)
(72) Inventeur: Saudemont, Thierry, 64110 Jurancon (FR); Malinge, Jean, 64300 Loubieng (FR); Lacombe, Jean-Loup, 64230 Artiguelouve (FR); Cochard, Daniel, 64300 Argagnon (FR); Violle, Henri, 64300 Baigts de Bearn (FR)
(74) Mandataire: Cabinet Hirsch

(57) **Abrégé**

L'invention a pour objet un procédé de préparation de support de catalyseur pour la polymérisation des α-oléfines comprenant les étapes de (i) réaction, en présence d'un premier donneur d'électron, d'un composé organique chloré et d'un mélange préalable d'un alkylmagnésien et d'un composé organique de l'aluminium et éventuellement d'un second donneur d'électron; et (ii) l'activation du produit de l'étape (i) en suspension dans un liquide inerte par un donneur d'électron d'activation.

L'invention a aussi pour objet le support susceptible d'être obtenu par ce procédé, un catalyseur pour la polymérisation d'α-oléfines comprenant le support de catalyseur selon l'invention et un halogénure de métal de transition du groupe IV.

L'invention a encore pour objet un procédé de polymérisation d'α-oléfines comprenant la mise en contact de l'α-oléfine avec un catalyseur selon l'invention.

L'invention s'applique particulièrement à la polymérisation du propylène.

## Description

L'invention concerne un procédé de préparation de support de catalyseur pour la polymérisation (stéréospécifique) des α-oléfines, en particulier du propylène, ainsi que le support ainsi obtenu.

La polymérisation des α-oléfines en général est réalisée à l'aide de catalyseurs de type Ziegler Natta. Le système catalytique du type Ziegler-Natta est généralement constitué de deux éléments indissociables: une composante catalytique à base de métal de transition déposé sur un support à base de chlorure de magnésium et un cocatalyseur généralement à base d'un composé d'aluminium. De nombreux brevets décrivent ces composants catalytiques et leurs supports.

La demande de brevet EP A-0 239475 décrit un support sphérique de catalyseur de morphologie contrôlée pour la polymérisation d'α-oléfines. Le support de catalyseur est obtenu par réaction d'un composé organique chloré en présence d'un donneur d'électron, et d'un mélange préalable d'un alkylmagnésien et d'un aluminoxane et/ou d'aluminosiloxane et éventuellement d'un donneur d'électron. Le support est ensuite soumis à une étape d'activation par un composé chloré avant d'être imprégné d'un halogénure de métal de transition. Ce procédé conduit à des catalyseurs efficaces pour la polymérisation de l'éthylène. Cependant, ils se sont avérés moins performants pour la polymérisation du propylène en particulier.

On connaît l'activation de supports de catalyseurs par un traitement avec des monoéthers cycliques pour les catalyseurs de polymérisation de l'éthylène. La demande de brevet EP 0 554141 décrit par exemple un procédé d'activation de supports à base de chlorure de magnésium entrant dans la fabrication de la composante catalytique de polymérisation de l'éthylène. Ce procédé comprend l'activation du support en suspension dans un liquide inerte par un mono-éther cyclique. Le document ne décrit ni suggère toutefois pas la possibilité d'une telle activation pour les supports de catalyseur à morphologie contrôlée adaptés pour la polymérisation du propylène.

Le brevet US 3 642 746 décrit un système de catalyseur Ziegler-Natta permettant de réduire la teneur en cendres du polymère obtenu. Le catalyseur est obtenu par le prétraitement d'un dihalide d'un métal divalent avec un donneur d'électron et l'imprégnation du support obtenu avec un halogénure d'un métal de transition.

On connaît enfin par US 5 055 535 un procédé de polymérisation de l'éthylène en phase gazeuse dans le but d'obtenir un polyéthylène linéaire à distribution de poids étroite. Ce procédé fait intervenir un catalyseur Ziegler-Natta en présence d'un alkylaluminium et d'un monoéther. Selon ce document, le monoéther ne doit pas être en contact avec le catalyseur en absence du cocatalyseur dans le milieu. Le monoéther constitue donc une base de Lewis externe, il n'intervient qu'à la polymérisation. En outre, le monoéther n'agit pas comme activateur de polymérisation et ne permet donc pas d'augmenter la productivité.

On sait que la polymérisation stéréospécifique des α-oléfines au-delà de l'éthylène tels que le propylène exige un catalyseur à caractère stéréospécifique. En effet, contrairement à la polymérisation de l'éthylène, qui est une molécule symétrique, la polymérisation des α-oléfines asymétriques tels que le propylène peut conduire à des enchaînements isotactiques, syndiotactiques ou atactiques. L'utilisation d'un catalyseur stéréospécifique peut alors assurer l'obtention de polymères de structure souhaitée, à forte dominance syndiotactique ou isotactique par exemple. Cela explique que les catalyseurs utilisés pour la polymérisation de l'éthylène ne soient pas obligatoirement appropriés pour la polymérisation du polypropylène.

L'invention propose, de façon surprenante, d'appliquer l'activation adaptée à l'éthylène à un support adapté pour le propylène.

L'invention permet la réalisation de catalyseurs qui sont à la fois très performants et très stéréospécifiques de la polymérisation des α-oléfines ayant au moins 3 atomes de carbone, en particulier du propylène.

L'invention concerne donc un procédé de préparation de support de catalyseur pour la polymérisation des α-oléfines comprenant les étapes de:
(i) la réaction, en présence d'un premier donneur d'électron, d'un composé organique chloré et d'un mélange préalable d'un alkylmagnésien et d'un aluminoxane et/ou aluminosiloxane et/ou alkylaluminium et éventuellement d'un second donneur d'électron; et
(ii) l'activation du produit de l'étape (i) en suspension dans un liquide inerte par un donneur d'électron d'activation.

L'invention a aussi pour objet le support de catalyseur susceptible d'être obtenu par le procédé selon l'invention.

L'invention est maintenant décrite plus en détails dans la description qui suit.

Selon l'invention, le support sphérique de catalyseur est préparé par réaction en présence d'un donneur d'électron, d'un composé organique chloré avec un mélange préalable d'un alkylmagnésien et d'un composé organique de l'aluminium, aluminoxane et/ou aluminosiloxane et/ou alkyl-aluminium. Le composé organique chloré est mis à réagir dans le mélange préalable d'alkylmagnésien et du composé organique de l'aluminium, la réaction ayant lieu en présence d'un premier donneur d'électron. Le mélange préalable d'alkylmagnésien et d'un composé organique de l'aluminium peut comprendre aussi un second donneur d'électron, qui en général est du même type (mais pas obligatoirement) que le premier donneur d'électron.

La réaction est réalisée en présence d'un donneur, qui peut être apporté:
- par le mélange préalable du composé organique chloré dans ce (premier) donneur; ou
- par le mélange préalable d'alkylmagnésien et du composé organique de l'aluminium (aluminoxane et/ou aluminosiloxane et/ou alkylaluminium) dans ce (premier) donneur; ou
- à la fois par le mélange préalable du composé organique chloré dans ce (premier) donneur et par le mélange préalable d'alkylmagnésien et du composé organique de l'aluminium (aluminoxane et/ou aluminosiloxane et/ou alkylaluminium) dans ce (second) donneur. Dans ce cas, le second donneur peut être identique ou différent du premier donneur; de préférence il est identique.

Selon un mode de réalisation, le composé organique chloré est mélangé avec au moins une partie du premier donneur d'électron avant la réaction de l'étape (i), cette partie étant de préférence au moins 50%.

Selon un mode de réalisation, la quantité de premier donneur d'électron mélangée avec le composé organique chloré avant la réaction de l'étape (i) représente, en moles, plus de 50% du total des premier et second donneurs présents au cours de la réaction de l'étape (i).

Selon un mode de réalisation, la réaction de l'étape (i) a lieu en présence d'un premier donneur d'électron, le mélange préalable d'un alkylmagnésien et d'un aluminoxane et/ou aluminosiloxane et/ou alkylaluminium comprenant un second donneur d'électron, identique au premier donneur.

A l'issue de l'étape (i), le solide obtenu est en général sensiblement sphérique.

L'alkylmagnésien est préalablement mélangé à l'aluminoxane et/ou l'aluminosiloxane et/ou un alkylaluminium, de préférence en solution dans un solvant inerte tel qu'un hydrocarbure comme l'hexane ou l'heptane, de préférence en présence d'un donneur d'électron, qui peut être le premier ou le second donneur, selon le cas. Une fois réalisé le mélange, on fait réagir le composé organique chloré, en général (mais pas nécessairement) dilué dans un (premier) donneur d'électron et éventuellement dans un solvant inerte tel qu'un hydrocarbure comme l'hexane ou l'heptane. A la fin de la réaction, le support formé, en suspension dans le milieu réactionnel, est filtré et éventuellement lavé avec un liquide inerte. Le support, en suspension dans un solvant inerte tel qu'un hydrocarbure comme l'hexane ou l'heptane, est ensuite mis en contact avec un donneur d'électron dit d'activation, de préférence un éther cyclique. Cette opération d'activation peut être réalisée avant ou après la filtration et les lavages précédents. Le support formé est filtré et éventuellement lavé avec un liquide inerte si le traitement par l'éther cyclique a eu lieu après la première filtration et les premiers lavages. On obtient ainsi un support dont le diamètre des particules est compris généralement entre 5 et 150 microns et plus généralement entre 10 et 100. La largeur de répartition granulométrique des supports, et par conséquent des catalyseurs ultérieurs est très étroite, en générale inférieure à 5. La largeur de répartition granulométrique des polymères finaux est également étroite dès lors que le procédé de polymérisation ne génère sensiblement pas de fines, c'est-à-dire n'endommage pas la particule en croissance pendant la polymérisation. Cette largeur de répartition granulométrique est caractérisée par la mesure de SPAN, où le span est égal à (D90 - D10)/D50 dans lequel D90. D10 et D50 représentent le diamètre en dessous duquel se trouvent respectivement 90%, 10% et 50% en poids des particules. Les polymères finaux présentent en général une valeur de span inférieure à 5, et de préférence inférieure à 2.

L'alkylmagnésium mis en oeuvre répond à la formule R1MgR2 dans laquelle R1 et R2 sont des radicaux alkyle possédant de 1 à 12 atomes de carbone.

L'aluminoxane pouvant entrer dans la composition du support est choisi parmi les produits répondant à la formule: 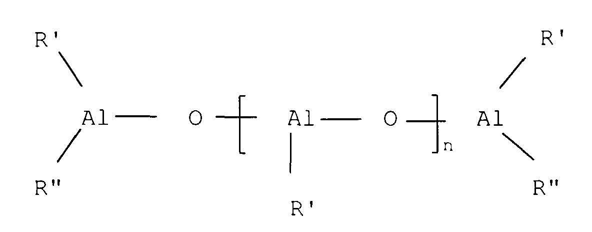 dans laquelle R' est un radical alkyle possédant de 1 à 16 atomes de carbone, les R" formant ensemble un radical -O- ou représentant chacun un radical R' et, n étant un nombre entier de 0 à 20.

L'aluminosiloxane pouvant entrer dans la composition du support est choisi parmi les produits répondant à la formule: 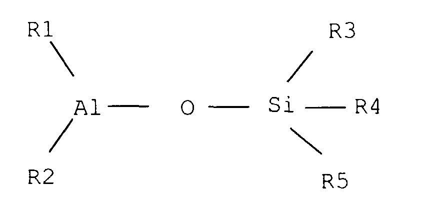 dans laquelle R1, R2, R3, R4, R5, identiques ou différents, représentent un radical alkyle possédant de 1 à 12 atomes de carbone, de préférence de 1 à 6 atomes de carbone, ou encore un atome d'hydrogène sachant que de préférence il n'y a pas plus de trois atomes d'hydrogène par mole de dérivé, ou enfin un atome de chlore sachant que de préférence il n'y a pas plus de trois atomes de chlore par mole de dérivé.

L'alkylaluminium pouvant entrer dans la composition du support est choisi parmi les produits répondant à la formule A1R1R2R3 dans laquelle les groupes R1, R2 et R3 possèdent la même définition que précédemment.

Le composé organique chloré, servant d'agent chlorant du dérivé de l'alkylmagnésien et du composé organique de l'aluminium est choisi parmi les chlorure d'alkyle dans lesquels le radical alkyle est primaire, secondaire ou tertiaire et comprend éventuellement un hétéroatome, ledit radical comprenant jusqu'à 12 atomes de carbone, de préférence jusqu'à 7 atomes de carbone, parmi les polyhalogénures d'alkyle ou encore parmi les chlorures d'acide. Les composés préférés sont le chlorure de tertiobutyle, le chlorure de n-butyle, le dichloroéthane, le chlorure de thionyle, le chlorure de benzoyle.

La réaction est mise en oeuvre en présence d'un premier donneur d'électron, et éventuellement d'un second donneur apporté par le mélange préalable d'un mélange préalable d'un alkylmagnésien et d'un composé organique de l'aluminium

Ces premier et second donneurs d'électron, identiques ou différents, peuvent être choisis parmi les monoéthers aliphatiques ou cycliques et diéthers aliphatiques ou cycliques, les acides carboxyliques aliphatiques ou aromatiques et leurs esters alcoyliques, les cétones, les esters vinyliques, les dérivés acryliques, en particulier acrylates ou méthacrylates d'alcoyle, et les silanes. Les esters peuvent également être utilisés sous forme de produits d'addition avec des halogénures d'acide de Lewis différents des dihalognéures de magnésium. Conviennent notamment comme premier et second donneurs d'électron les composés tels que paratoluate de méthyle, benzoate d'éthyle, acétate d'éthyle ou de butyle, éther éthylique, para-anisate d'éthyle, dibutylphtalate, dioctylphtalate, diisobutylphtalate, acétone, méthylisobutylcétone, acétate de vinyle, méthacrylate de méthyle, phényletriéthoxysilane, cyclohexylméthyldiméthoxysilane, dicyclopentyldiméthoxysilane, 2,2-diisobutyl-1,3-dimethoxypropane, 2,2-diisobutyl-1,3-diéthoxypropane, 2-isopropyl-2-isobutyl-1,3-dimethoxypropane, 2-isopropyl-2-cyclohexyl-1,3-dimethoxypropane. 2-isopropyl-2-cyclopentyl-1,3-dimethoxypropane, 2,2-dicyclopentyl-1,3-dimethoxypropane, 9,9-bis(methoxyméthyl)fluorène, éther diisoamylique, éther sec-butylique, tetrahydrofuranne et dioxane. Il est également possible d'utiliser tout mélange des composés ci-dessus.

Ces premier et second donneurs d'électron sont de préférence des éthers aliphatiques ou cycliques, notamment éther diisoamylique, éther sec-butylique ou tetrahydrofuranne. Sont particulièrement préférés les éthers aliphatiques.

Afin de bien contrôler la morphologie du support final, il est préféré d'associer les composants les uns aux autres en quantités appropriées. Ainsi, le rapport molaire Mg/Al est compris entre 5 et 200 de préférence entre 10 et 80. La concentration en composé organique chloré est telle que le rapport molaire Cl/Mg est de préférence supérieur à 2, avantageusement il est compris entre 2 et 4. La quantité de second donneur d'électron à mettre en oeuvre avec le dérivé de l'alkylmagnésien et le composé organique de l'aluminium est telle que le rapport molaire de ce second donneur d'électron sur le magnésium est compris de préférence entre 0,01 et 5. La quantité de premier donneur d'électron à mettre en oeuvre avec l'agent chlorant est telle que le rapport molaire de ce premier donneur d'électron sur le magnésium est compris de préférence entre 0,01 et 5.

Dans le cadre de cette invention, le support tel qu'il a été préparé ci-dessus est traité, en suspension dans un solvant inerte, par un donneur d'électron d'activation. Le rapport molaire donneur d'électron d'activation sur magnésium initialement introduit est en général compris entre 0,1 et 3. Pour éviter toute altération du support à base de chlorure de magnésium il est souhaitable que le donneur d'électron d'activation soit fortement dilué dans le liquide inerte. Le rapport en volume de liquide inerte sur donneur d'activation est compris en général entre 1 et 20, de préférence entre 1 et 10. Ce traitement peut se faire sous agitation à une température comprise entre 20°C et (Teb + 20°C), Teb étant la température d'ébullition du donneur d'électron d'activation. De préférence, la température est comprise entre 20°C et (Teb - 10°C). Dans ce domaine de température préféré, le support et le catalyseur sont plus solides et il se forme moins de fines (avec élévation du span) lors de la polymérisation. Le donneur d'électron d'activation est de préférence un éther cyclique choisi parmi les monoéthers dont l'oxygène forme un cycle possédant au moins 4 atomes de carbone et 12 au plus. Il n'est pas exclu que certains atomes de carbone du cycle soient liés à des radicaux hydrocarbonés substituants, le nombre d'atome de carbone total, dans ce cas, de l'éther cyclique ne dépassant pas 16. Parmi ces éthers peuvent être cités le tetrahydrofuranne. le tetrahydropyrane, le 2-méthyl-tetrahydrofuranne, le 3-méthyltétrahydropyrane; le tetrahydrofuranne étant préféré.

Les supports selon l'invention sont particulièrement adaptés à la fabrication des catalyseurs Ziegler-Natta de polymérisation des oléfines, à base d'halogénures de métal de transition du groupe IV tel que le titane.

Le support est par exemple imprégné de l'halogénure de métal de transition plus particulièrement de formule Ti(OR)nX4-n où R est un radical alkyle de 1 à 12 atomes de carbone, X un halogène et n un nombre entier compris entre 0 et 4, de préférence TiCl4. L'imprégnation peut se faire de façon classique en additionnant au support une quantité suffisante d'halogénure de métal de transition éventuellement dans un solvant inerte pour former une suspension homogène. Cette imprégnation peut se faire en présence d'un donneur d'électron. Le support peut éventuellement subir deux imprégnations successives ou plus par le composé de formule générale Ti(OR)nX4-n, chaque imprégnation pouvant être ou non réalisée en présence de donneur d'électron (d'imprégnation).

L'invention a aussi pour objet un procédé de préparation d'un catalyseur.

Les donneurs d'électron d'imprégnation adaptés pour la préparation de catalyseurs supportés sont des composés organiques contenant un ou plusieurs atomes d'oxygène, d'azote, de soufre ou de phosphore. A titre d'exemple on peut citer les acides organiques, les esters d'acides organiques, les alcools, les éthers, les aldéhydes, les cétones, les amines, amines oxydes les amides, les thiols. L'association d'un ou plusieurs donneur d'électron ci-dessus peut être réalisée. Plus spécifiquement, les donneurs d'électron contenant un ou plusieurs atomes d'oxygènes couramment utilisés peuvent être des esters d'acide organique ou des éthers. Plus spécifiquement il peut s'agir d'esters d'acide mono ou dicarboxylique aromatique ou de diéthers. A titre d'exemple d'esters aromatiques on peut citer les dialkylphtalates pour lesquels le groupe alkyle contient de 1 à 20 atomes de carbone, de préférence de 1 à 10 atomes de carbone, tels que le di(n-butyl)phtalate, le diisobutylphtalate, le dioctylphtalate, le diheptylphtalate, le diéthylphtalate. A titre d'exemple de diéthers on peut citer 2,2-diisobutyl-1,3-dimethoxypropane, 2,2-diisobutyl-1,3-diéthoxypropane, 2-isopropyl-2-isobutyl-1,3-dimethoxypropane, 2-isopropyl-2-cyclohexyl-1,3-dimethoxypropane, 2-isopropyl-2-cyclopentyl-1,3-dimethoxypropane, 2,2-dicyclopentyl-1,3-dimethoxypropane, 9,9-bis(methoxyméthyl)fluorène.

La quantité du donneur d'électron d'imprégnation peut varier. Elle est avantageusement comprise entre 2 et 20% et de préférence entre 4 et 16% en masse de la composante catalytique.

Selon un mode de réalisation, la quantité de donneur d'électron d'imprégnation est inférieure à 9% en masse de la composante catalytique. Selon ce mode de réalisation, on favorisera par la suite la production de polyalphaoléfine présentant une distribution des masses moléculaires élargie.

Selon un autre mode de réalisation, la quantité de donneur d'électron d'imprégnation est supérieure à 9% en masse de la composante catalytique. Selon ce mode de réalisation, on obtiendra un catalyseur supporté présentant une productivité très élevée.

Comme solvant inerte adapté à la synthèse d'un catalyseur Ziegler-Natta on peut utiliser les hydrocarbures aliphatiques tels l'hexane, l'heptane ou le décane, les hydrocarbures alycycliques tels que le cyclohexane ou l'éthylcyclohexane, les hydrocarbures aromatiques tel que le toluène, le xylène ou le chlorobenzène ou tout mélange de solvant décrits ci-dessus.

La composante catalytique ainsi préparée est associée à un système cocatalytique pour réaliser la polymérisation des oléfines. Ce système cocatalytique est constitué par un cocatalyseur et éventuellement un donneur d'électron. Le cocatalyseur est habituellement choisi parmi les alkyles métalliques du groupe 111. Parmi ces produits peuvent être cités les alkylaluminiums tels que le triméthylaluminium, le triéthylaluminium, le triisobutylaluminium et des combinaisons de ces produits. Le donneur d'électron cocatalytique peut être choisi parmi les silanes aliphatiques ou aromatiques de formule générale SiR4 avec pouvant être un groupe alkyle contenant de 1 à 20 atomes de carbone et/ou un groupement alkoxy, OR'. R' étant un groupe alkyle contenant de 1 à 20 atomes de carbone. Le donneur d'électron cocatalytique peut également être choisi parmi la famille des silacycloalcanes. Le donneur d'électron cocatalytique peut également être choisi parmi la famille des diéthers de formule générale R1R2C(CH2OR3)2, R1, R2, R3 étant des groupes alkyles contenant de 1 à 20 atomes de carbone. Comme donneur d'électron cocatalytique, on préférera par exemple: dicyclopentyldiméthoxysilane, cyclohexylméthyl-diméthoxysilane, diisobutyldiméthoxysilane.

L'invention s'applique à la polymérisation des α-oléfines et plus particulièrement du propylène, ainsi que la copolymérisation ou la terpolymérisation des α-oléfines. Dans le cas de copolymérisation, l'autre monomère peut être de l'éthylène ou un autre monomère. Lorsque le comonomère n'est pas une α-oléfine, il représente moins de 50% en masse. Le terme d'α-oléfine tel qu'utilisé dans l'invention vise les oléfines comprenant de 3 à 20 atomes de carbone, de préférence de 3 à 8 atomes de carbone. L'α-oléfine préférée est le propylène. Dans le cas de copolymères de propylène, par exemple avec l'éthylène ou le butène, le comonomère représente en général moins de 30% en masse. En plus des polymères stéréospécifiques pouvant être réalisés par le catalyseur selon l'invention, celui-ci permet également la réalisation avec une forte productivité, de polymères non stéréospécifiques comme les copolymères statistiques d'alpha-oléfine à fort taux de comonomère comme l'éthylène.

La polymérisation des α-oléfines peut se faire selon les procédés connus, en solution, en suspension, en masse, ou en phase gazeuse. De préférence, le diamètre moyen du catalyseur selon l'invention utilisé dans un procédé en suspension est compris entre 5 et 50 µm, alors que pour un procédé en phase gazeuse, il est compris de préférence entre 20 et 150 µm. Un agent de transfert de chaîne peut être utilisé pour contrôler l'indice de fluidité du polymère à produire. Comme agent de transfert de chaîne, on peut utiliser l'hydrogène, que l'on introduit en une quantité pouvant aller jusqu'à 90% et se situant en général entre 0.01 et 60% en mole de l'ensemble oléfine et hydrogène amené au réacteur. Cet agent de transfert de chaîne permet l'obtention d'un indice de fluidité donné, sachant que l'indice de fluidité augmente lorsque la quantité d'agent de transfert de chaîne augmente. L'invention offre l'avantage de faire consommer peu d'agent de transfert de chaîne pour un indice de fluidité donné.

L'invention fournit aussi un procédé de polymérisation d'α-oléfines, comprenant les étapes suivantes:
(i) préparation d'un support comme décrit ci-dessus;
(ii) activation de ce support comme décrit ci-dessus;
(iii) préparation d'un catalyseur sur le support activé de l'étape (ii), comme décrit ci-dessus;
(iv) mise en contact du catalyseur avec une charge d'α-oléfine dans des conditions de polymérisation.

Les exemples suivants illustrent l'invention sans la limiter.

### EXEMPLES

Toutes les manipulations sont réalisées sous atmosphère d'azote. On définit le HI comme le pourcentage de polymère insoluble dans l'heptane bouillant. L'indice de fluidité (melt index) est défini selon la norme ASTM-D 1238.

### Exemple 1

### Synthèse du support

Dans un réacteur en verre de 1 litre muni d'une double enveloppe, d'une agitation mécanique, d'un condenseur et d'une tubulure permettant d'introduire des réactifs on introduit 135g d'une solution constituée de 20% massique (0,24 mole) de butyléthylmagnésium (BEM) dans de l'heptane, 1,56g d'éther diisoamylique (0,01 mole), 9,16g (0,006 mole) d'une solution de tetraisobutyldialuminoxane (TiBAO) à 20% massique dans l'heptane. Ce mélange est agité pendant 1 heure à température ambiante à 500tr/min. La température du milieu réactionnel est ensuite élevée à 50°C.

Dans les mêmes conditions d'agitation et à 50°C on introduit au moyen d'une seringue un mélange constitué de 56,8g (0,61 mole) de chlorure de tertiobutyle et 2,34g (0,015 mole) d'éther diisoamylique à un débit de 35ml/h. Après cette introduction, l'agitation et la température sont maintenues aux valeurs précédentes pendant deux heures. La suspension ainsi obtenue est filtrée puis est lavée trois fois de suite avec à chaque fois 100ml d'hexane. Le milieu est filtré après chaque lavage.

Le solide récupéré est remis en suspension dans 200ml d'hexane, la température est portée à 40°C sous agitation (250tr/min). Dans ces conditions, on introduit à l'aide d'une seringue 33,6g (0,46 mole) de tetrahydrofuranne (THF) à un débit de 60ml/h. Après cette addition le milieu est maintenu à 40°C sous agitation pendant 15 minutes. La suspension est ensuite filtrée et le solide récupéré lavé trois fois avec à chaque fois 200ml d'hexane. Une filtration est réalisée après chaque lavage. On obtient un solide.

### Synthèse du catalyseur

Ce solide est mis en suspension dans 60ml de toluène à température ambiante sous agitation (250tr/min). On ajoute 178ml de TiCl4. La température est élevée en 10 minutes à 85°C. Lorsque la température atteint 50°C an ajoute 3.42g de din-butylphtalate (DnBP). La température est maintenue à 85°C pendant 2 heures. Après filtration on ajoute 123ml de toluène et 7ml de TiCl4 et l'on agite à 85°C pendant 1h. Cette opération est renouvelée 4 fois. Après la dernière filtration on ajoute 200ml d'hexane et l'on agite pendant 15 minutes à 70°C. Après filtration le solide est séché pendant 2 heures à 70°C. On obtient 23,4g d'un catalyseur C1 contenant 1,9% de titane, 13,9% de magnésium et 8,3% de DnBP. Le D50 est de 11.4 microns pour un span de 0,6.

### Polymérisation

Dans un réacteur métallique de 3,5 litres muni d'une double enveloppe et d'une agitation mécanique, préalablement placé sous atmosphère inerte on introduit 1 bar d'hydrogène et 2,4 litres de propylène. Sous agitation on introduit à température ambiante 24 mMoles de triéthylaluminium, 1,2 mMoles de dicyclopentyldiméthoxysilane et 15mg de catalyseur C1. La température est élevée à 70°C en dix minutes puis maintenue à cette valeur pendant 1 heure. Le propylène résiduel est alors dégazé et l'on récupère 605 grammes de polypropylène soit 40500g polypropylène / gramme de catalyseur C1 présentant un indice de fluidité de 7,0 gramme/10 minutes et un HI de 97,0%. D50= 386: span=1,2; % fines = 8,8 (pourcentage de particule présentant un diamètre inférieur à 100 microns)

### Exemple 2

### Synthèse du support

Dans un réacteur en verre de 1 litre muni d'une double enveloppe, d'une agitation mécanique, d'un condenseur et d'une tubulure permettant d'introduire des réactifs on introduit 135g d'une solution constituée de 20% massique de butyléthylmagnésium (BEM) dans de l'heptane, 1,56g d'éther diisoamylique, 9,16g d'une solution de tetraisobutyldialuminoxane (TiBAO) à 20% massique dans l'heptane. Ce mélange est agité pendant 1 heure à température ambiante à 500tr/min. La température du milieu réactionnel est ensuite élevée à 50°C.

Dans les mêmes conditions d'agitation et à 50°C on introduit au moyen d'une seringue un mélange constitué de 56,8g de chlorure de tertiobutyle et 2,34g d'éther diisoamylique à un débit de 35ml/h. Après cette introduction, l'agitation et la température sont maintenues aux valeurs précédentes pendant 2h. La température est ramenée à 40°C et l'agitation baissée à 250tr/min. On introduit à l'aide d'une seringue 33.6g de tetrahydrofuranne (THF) à un débit de 60ml/h. Après cette addition le milieu est maintenu à 40°C sous agitation pendant 15 minutes. La suspension est ensuite filtrée et le solide récupéré lavé trois fois avec à chaque fois 200ml d'hexane. Une filtration est réalisée après chaque lavage. On obtient un solide.

### Synthèse du catalyseur

20g de ce solide sont mis en suspension dans 60ml de toluène à température ambiante sous agitation (250tr/min). On ajoute 160ml de TiCl4. La température est élevée en 10 minutes à 100°C. Lorsque la température atteint 50°C on ajoute 3,06g de DnBP. La température est maintenu à 100°C pendant 2 heures. Après filtration on ajoute 123ml de toluène et 14ml de TiCl4 et l'on agite à 100°C pendant 1h. Cette opération est renouvelée 4 fois. Après la dernière filtration on ajoute 200ml d'hexane et l'on agite pendant 15 minutes à 70°C. Cette opération est renouvelée 2 fois. Après filtration le solide est séché pendant 2 heures à 70°C. On obtient 11,3g d'un catalyseur C2 contenant 2.0% de titane, 19,2% de magnésium et 8.8% de DnBP. Le D50 est de 10.4 microns pour un span de 1,1.

### Polymérisation

Dans un réacteur métallique de 3,5 litres muni d'une double enveloppe et d'une agitation mécanique, préalablement placé sous atmosphère inerte on introduit 1 bars d'hydrogène et 2,4 litres de propylène. Sous agitation on introduit à température ambiante 24 mMoles de triéthylaluminium, 1,2 mMoles de dicyclopentyldiméthoxysilane et 15mg de catalyseur C2. La température est élevée à 70°C en dix minutes puis maintenue à cette valeur pendant 1 heure. Le propylène résiduel est alors dégazé et l'on récupère 800 grammes de polypropylène soit 53300g polypropylène/gramme de catalyseur C2 présentant un indice de fluidité de 2,9g/10min et un HI de 98,2%. D50=360; span=1,0; % fines = 10.

### Exemple 3

### Synthèse du support

Dans un réacteur en verre de 2 litres muni d'une double enveloppe, d'une agitation mécanique et d'une tubulure permettant d'introduire les réactifs on introduit 400g de butyléthylmagnésium (BEM) à 20% dans l'heptane, 4,6g d'éther diisoamylique, 18,09g d'une solution de tetraisobutyldialuminoxane (TiBAO) à 20% massique dans l'hexane. ce mélange est agité pendant 1 heure à température ambiante à 400tr/min la température du milieu réactionnel est ensuite élevée à 50°C.

Dans les mêmes conditions d'agitation et à 50°C on introduit au moyen d'une seringue un mélange constitué de 168,3g de chlorure de tertiobutyle et de 46,05g d'éther diisoamylique à un débit de 120ml/h. Après cette introduction, la température est ramenée à 40°C et la vitesse d'agitation baissée à 250tr/min. On introduit à l'aide d'une seringue 99,6g de THF à un débit de 120ml/h. après cette addition le milieu est maintenu à 40°C sous agitation pendant 15 minutes. La suspension est ensuite filtrée et le solide récupéré lavé trois fois avec à chaque fois 800ml d'hexane. Une filtration est réalisée après chaque lavage. On obtient un solide.

### Synthèse du catalyseur

11,8g de ce solide sont mis en suspension dans 31 ml de toluène à température ambiante sous agitation (250 tr/min). On ajoute 94ml de TiCl4. La température est élevée en 10 minutes à 100°C. Lorsque la température atteint 50°C on ajoute 1,81g de DnBP. La température est maintenue à 100°C pendant deux heures. Après filtration on ajoute 7,7ml de TiCl4 et 146ml de toluène et l'on agite à 250tr/min à 100°C pendant 1 heure. Cette opération est renouvelée trois fois. Après la dernière filtration on ajoute 118ml d'hexane et l'on agite à 250tr/min pendant 15 minutes à 70°C. Cette opération est renouvelée 2 fois. Après filtration le solide est séché pendant 2 heures à 70°C. On obtient 7,3g de catalyseur C3, D50=31.2µm, span=1,1.

### Polymérisation

Dans un réacteur métallique de 8 litres muni d'une double enveloppe et d'une agitation mécanique, préalablement placé sous atmosphère inerte on introduit 0,5 bars d'hydrogène et 6 litres de propylène. Sous agitation et à température ambiante on introduit 30 mmoles de triéthylaluminium, 1.5 mmoles de dicyclopentydiméthoxysilane et 30 mg de catalyseur C3. La température est élevée à 70°C en 10 minutes est maintenue à cette valeur pendant 1 heure. La température étant ramenée à 25°C, le propylène résiduel est dégazé et l'on récupère 1410 grammes de polypropylène soit 47000 g de polypropylène par gramme de catalyseur C3 présentant un indice de fluidité de 7,8 g/10 minutes. Dp50=932µm; span=1,0; %fines=2,3, HI=97,9.

### Exemple 4

### Synthèse du support

Dans un réacteur en verre de 1 litre muni d'une double enveloppe, d'une agitation mécanique et d'une tubulure permettant d'introduire les réactifs on introduit 200g de butyléthylmagnésium (BEM) à 20% dans l'heptane, 2.5g d'éther diisoamylique, 9,05g d'une solution de tetraisobutyldialuminoxane (TiBAO) à 20% massique dans l'hexane.

Ce mélange est agité pendant 1 heure à température ambiante à 400 tr/min la température du milieu réactionnel est ensuite élevée à 50°C.

Dans les mêmes conditions d'agitation et à 50°C on introduit au moyen d'une seringue, un mélange constitué de 84,4g de chlorure de tertiobutyle et de 23,3g d'éther diisoamylique à un débit de 60ml/h. Après cette introduction, la température est ramenée à 40°C et la vitesse d'agitation baissée à 250 tr/min. On introduit à l'aide d'une seringue, 50,9g de THF à un débit de 60 ml/h. Après cette addition, le milieu est maintenu à 40°C sous agitation pendant 15 minutes. La suspension est ensuite filtrée et le solide récupéré, lavé trois fois avec à chaque fois 200 ml d'hexane. Une filtration est réalisée après chaque lavage. On obtient un solide.

### Synthèse du catalyseur

12,8g de ce solide sont mis en suspension dans 34ml de toluène à température ambiante sous agitation (250 tr/min). On ajoute 102ml de TiCl4. La température est élevée en 10 minutes à 100°C. Lorsque la température atteint 50°C, on ajoute 1,96g de DnBP. La température est maintenue à 100°C pendant 2 heures. Après filtration, on ajoute 8ml de TiCl4 et 158ml de toluène et l'on agite à 250 tr/min à 100°C pendant 1 heure. Cette opération est renouvelée trois fois. Après la dernière filtration, on ajoute 128ml d'hexane et l'on agite à 250 tr/min pendant 15 minutes à 70°C. Cette opération est renouvelée 2 fois. Après filtration, le solide est séché pendant 2 heures à 70°C. On obtient 6,7g de catalyseur C4, D50 = 19,7 µm, span = 1,4. Ce catalyseur contient 1.9% de titane, 18,9% de magnésium et 9,8% de DnBP.

### Polymérisation

Dans un réacteur métallique de 8 litres muni d'une double enveloppe et d'une agitation mécanique, préalablement placé sous atmosphère inerte, on introduit 0.3 bars d'hydrogène et 6 litres de propylène. Sous agitation et à température ambiante, on introduit 30 mmoles de triéthylaluminium, 1,5 mmoles de dicyclcopentydiméthoxysilane et 30mg de catalyseur C3. La température est élevée à 70°C en 10 minutes et maintenue à cette valeur pendant 1 heure. La température étant ramenée à 25°C, le propylène résiduel est dégazé et l'on récupère 1311 grammes de polypropylène soit 44700g de polypropylène par gramme de catalyseur C4 présentant un indice de fluidité de 2 g/10 minutes. Dp50 = 804µm ; span = 1,2 ; % fines = 6,2 Mw/Mn = 6.8 (Mw/Mn : polymolécularité ou indice de polydispersité, rapport de la masse moléculaire en poids sur la masse moléculaire en nombre).

### Exemple 5

### Synthèse du support

La procédure est identique à l'exemple 4.

### Synthèse du catalyseur

La procédure est identique à l'exemple 4, sauf que l'on remplace les 1,96g de DnBP par 0.65g de DnBP. On obtient alors 6,6g de catalyseur C5, D50 = 20,4µm, span = 1,3. Ce catalyseur contient 2,6% de titane, 19% de magnésium et 5,4% de DnBP.

### Polymérisation

La polymérisation est réalisée comme dans l'exemple 4 mais on introduit 0,35 bars d'hydrogène au lieu de 0,3 bars. On récupère 1218g de polymère soit 40600g de polypropylène par gramme de catalyseur C5 présentant un indice de fluidité de 10g/10 min. Dp50 = 684 ; span = 1,2 ; fines = 3%, Mw/Mn = 16,1.

### Exemple 6

### Synthèse du support

La procédure est identique à l'exemple 4.

### Synthèse du catalyseur

13,1g de ce solide sont mis en suspension dans 35ml de toluène à température ambiante sous agitation (250 tr/min). On ajoute 105ml de TiCl4. La température est élevée en 10 minutes à 100°C. Lorsque la température atteint 50°C on ajoute 32,8g de DnBP. La température est maintenue à 100°C pendant 2 heures. Après filtration, on ajoute 8,5 ml de TiCl4 et 162ml de toluène et l'on agite à 250 tr/min à 100°C pendant 1 heure. Cette opération est renouvelée trois fois. Après la dernière filtration, on ajoute 131ml d'hexane et l'on agite à 250 tr/min pendant 15 minutes à 70°C. Cette opération est renouvelée 2 fois. Après filtration, le solide est séché pendant 2 heures à 70°C. On obtient 6.9g de catalyseur C6, D50 = 20,9 ; span = 1,4.

Ce catalyseur contient 1.7 % de titane, 18,5% de magnésium et 12,8% de DnBP.

### Polymérisation

La polymérisation est réalisée comme dans l'exemple 4 sauf que l'on introduit 0,35b d'hydrogène au lieu de 0,3 bars. On récupère 1863g de polypropylène soit 62100g de propylène par gramme de catalyseur C6 présentant un indice de fluidité de 4,8g/10 minutes. Dp50 = 805 ; span = 1,2 ; % fines = 4,9.

### Exemple de comparaison

### Synthèse du support

Dans un réacteur en verre de 1 litre muni d'une double enveloppe, d'une agitation mécanique, d'un condenseur et d'une tubulure permettant d'introduire des réactifs on introduit 135g d'une solution constituée de 20% massique (0,24 mole) de butyléthylmagnésium (BEM) dans de l'heptane, 1,56g d'éther diisoamylique (0,01 mole), 9,16g (0.006 mole) d'une solution de tetraisobutyldialuminoxane (TiBAO) à 20% massique dans l'heptane. Ce mélange est agité pendant 1 heure à température ambiante à 500tr/min. La température du milieu réactionnel est ensuite élevée à 50°C.

Dans les mêmes conditions d'agitation et à 50°C on introduit au moyen d'une seringue un mélange constitué de 56,8g (0,61 mole) de chlorure de tertiobutyle et 2,34g (0,015 mole) d'éther diisoamylique à un débit de 35ml/h. Après cette introduction, l'agitation et la température sont maintenues aux valeurs précédentes pendant deux heures. La suspension ainsi obtenue est filtrée puis est lavée trois fois de suite avec à chaque fois 100ml d'hexane. Le milieu est filtré après chaque lavage.

Le solide ainsi obtenu est mis en suspension dans 150ml de toluène. La température est porté à 110°C et maintenue à cette valeur pendant deux heures. Après filtration, l'opération est renouvelée. Après la dernière filtration le solide est mis en suspension dans 100ml d'heptane et maintenu à 100°C pendant 30 minutes, puis filtrée. Cette opération est renouvelée 3 fois. Le solide est séché à 70°C pendant 1 heure. On obtient un solide.

### Synthèse du catalyseur

5g de ce solide sont mis en suspension dans 31,5ml de toluène à température ambiante sous agitation (250tr/min). On ajoute 94,6ml de TiCl4. La température est élevée en 10 minutes à 90°C. Lorsque la température atteint 50°C on ajoute 1,75ml de DnBP. La température est maintenu à 90°C pendant 2 heures. Après filtration on ajoute 30ml de TiCl4 et 270ml de toluène et l'on agite à 100°C pendant 1h. Cette opération est renouvelée 4 fois. Après la dernière filtration on ajoute 100ml d'hexane et l'on agite pendant 15 minutes à 70°C. Cette opération est renouvelée 2 fois. Après filtration le solide est séché pendant 30 minutes à 70°C. On obtient un catalyseur C3 contenant 0,28% de titane, 23,7% de magnésium. Le D50 est de 33,2 microns pour un span de 1,3.

### Polymérisation

Dans un réacteur métallique de 3,5 litres muni d'une double enveloppe et d'une agitation mécanique, préalablement placé sous atmosphère inerte on introduit 0,35 bars d'hydrogène et 2,4 litres de propylène. Sous agitation on introduit à température ambiante 24 mMoles de triéthylaluminium, 2,4 mMoles de cyclohexylméthyldiméthoxysilane et 30mg de catalyseur C3. La température est élevée à 70°C en dix minutes puis maintenue à cette valeur pendant 1 heure. Le propylène résiduel est alors dégazé et l'on récupère 69 grammes de polypropylène soit 2300g polypropylène / gramme de catalyseur C3.

L'invention n'est pas limitée aux modes de réalisation décrits mais est susceptible de nombreuses variations aisément accessible à l'homme de l'art.

## Revendications

1. Procédé de préparation de support de catalyseur pour la polymérisation des α-oléfines comprenant les étapes de:
(i) la réaction, en présence d'un premier donneur d'électron, d'un composé organique chloré et d'un mélange préalable d'un alkylmagnésien et d'un aluminoxane et/ou aluminosiloxane et/ou alkylaluminium et éventuellement d'un second donneur d'électron; et
(ii) l'activation du produit de l'étape (i) en suspension dans un liquide inerte par un donneur d'électron d'activation.

2. Procédé selon la revendication 1, caractérisé en ce que le composé organique chloré est mélangé avec au moins une partie du premier donneur d'électron avant la réaction de l'étape (i).

3. Procédé selon la revendication 1 ou 2, caractérisé en ce que la quantité de premier donneur d'électron mélangée avec le composé organique chloré avant la réaction de l'étape (i) représente, en moles, plus de 50% du total des premier et second donneurs présents au cours de la réaction de l'étape (i).

4. Procédé selon l'une des revendications 1 à 3, caractérisé en ce que la réaction de l'étape (i) a lieu en présence d'un premier donneur d'électron, le mélange préalable d'un alkylmagnésien et d'un aluminoxane et/ou aluminosiloxane et/ou alkylaluminium comprenant un second donneur d'électron, identique au premier donneur.

5. Procédé selon l'une des revendications 1 à 4, caractérisé en ce que les premier et second donneurs d'électron sont des éthers aliphatiques ou cycliques, de préférence des éthers aliphatiques.

6. Procédé selon la revendication 5, caractérisé en ce que les premier et second donneurs d'électron sont choisis parmi éther diisoamylique et éther *sec*-butylique.

7. Procédé selon l'une des revendications 1 à 6, caractérisé en ce que l'aluminoxane et/ou l'aluminosiloxane et/ou l'alkylaluminium et l'alkylmagnésium sont mis en oeuvre dans le rapport molaire Mg/Al compris entre 5 et 200, de préférence entre 10 et 80.

8. Procédé selon l'une des revendications 1 à 7, caractérisé en ce que la concentration en composé organique chloré est telle que le rapport molaire Cl/Mg est supérieur à 2, avantageusement il est compris entre 2 et 4.

9. Procédé selon l'une des revendications 1 à 8, caractérisé en ce que la quantité du second donneur d'électron mise en oeuvre avec le dérivé de l'alkylmagnésien et l'aluminoxane et/ou l'aluminosiloxane et/ou l'alkylaluminium est telle que le rapport molaire de ce donneur d'électron sur le magnésium est compris entre 0.01 et 5.

10. Procédé selon l'une des revendications 1 à 9, caractérisé en ce que la quantité de premier donneur d'électron mise en oeuvre avec le composé organique chloré est telle que le rapport molaire de celui-ci sur le magnésium est compris entre 0,01 et 5.

11. Procédé selon l'une des revendications 1 à 10, caractérisé en ce que le composé chloré est un chlorure d'alkyle primaire, secondaire ou tertiaire.

12. Procédé selon l'une des revendications 1 à 11, caractérisé en ce que le donneur d'électron d'activation est un monoéther cyclique.

13. Procédé selon la revendication 12, caractérisé en ce que le monoéther cyclique est le tétrahydrofurane, le tétrahydropyrane, le 2-méthyl-tétrahydrofurane, le 3-méthyl-tétrahydrofurane.

14. Procédé selon la revendication 13, caractérisé en ce que le monoéther cyclique est le tétrahydrofurane.

15. Procédé selon l'une des revendications 1 à 14, caractérisé en ce que le rapport molaire donneur d'électron d'activation sur magnésium initialement introduit est en général compris entre 0,1 et 3.

16. Procédé selon l'une des revendications 1 à 15, caractérisé en ce que le rapport de volume de liquide inerte sur le donneur d'électron d'activation est compris entre 1 et 20.

17. Procédé selon l'une des revendications 1 à 16, caractérisé en ce que l'étape d'activation est effectué à une température comprise entre 20°C et (Teb + 20°C), Teb étant la température d'ébullition du donneur d'électron d'activation.

18. Procédé selon la revendication 17, caractérisé en ce que l'étape d'activation est effectué à une température comprise entre 20°C et (Teb - 10°C).

19. Support de catalyseur pour la polymérisation des α-oléfines susceptible d'être obtenu par le procédé selon l'une quelconque des revendications 1 à 18.

20. Catalyseur pour la polymérisation d'α-oléfines comprenant le support de catalyseur selon la revendication 19, et un halogénure de métal de transition du groupe IV.

21. Catalyseur selon la revendication 20, dans lequel l'halogénure de métal de transition est le TiCl₄.

22. Catalyseur selon la revendication 20 ou 21, comprenant en outre un donneur d'électron d'imprégnation.

23. Catalyseur selon la revendication 22, dans lequel la quantité de donneur d'électron d'imprégnation est comprise entre 2 et 20% et de préférence entre 4 et 16% en masse de la composante catalytique.

24. Catalyseur selon la revendication 22 ou 23, dans lequel la quantité de donneur d'électron d'imprégnation est inférieure à 9% en masse de la composante catalytique.

25. Catalyseur selon la revendication 22 ou 23, dans lequel la quantité de donneur d'électron d'imprégnation est supérieure à 9% en masse de la composante catalytique.

26. Catalyseur selon l'une quelconque des revendications 22 à 25, dans lequel le donneur d'électron d'imprégnation est un dialkylphtalate.

27. Catalyseur selon l'une quelconque des revendications 20 à 26, présentant un diamètre moyen compris entre 5 et 150 µm.

28. Procédé de préparation d'un catalyseur selon l'une quelconque des revendications 20 à 27, comprenant l'imprégnation du support avec une composition d'un halogénure de métal de transition, éventuellement en présence d'un donneur d'électron d'imprégnation.

29. Procédé de polymérisation d'α-oléfines comprenant la mise en contact de l'α-oléfine avec un catalyseur selon l'une quelconque des revendications 20 à 27.

30. Procédé selon la revendication 29, caractérisé en ce que l'α-oléfine présente une valeur de span inférieure à 5, de préférence inférieure à 2.

31. Procédé selon la revendication 29 ou 30, caractérisé en ce que l'α-oléfine est le propylène.

32. Procédé selon l'une quelconque des revendications 29 à 31, caractérisé en ce qu'est produite une homopolyalphaoléfine.
